# EUROPÄISCHE PATENTSCHRIFT

(11) **EP 2 407 281 B1**
(45) Veröffentlichungstag und Bekanntmachung des Hinweises auf die Patenterteilung: **30.04.2014**
(21) Anmeldenummer: 11173517.1
(22) Anmeldetag: 12.07.2011
(51) Int. Cl.: B25J 9/02, B25J 13/08, B25J 19/00, B25J 19/06

(54) **Roboterintegrierter Arbeitsplatz**
Robot integrated workstation
Poste de travail robotisé

(30) Priorität: 16.07.2010 DE 102010027280
(43) Veröffentlichungstag der Anmeldung: 18.01.2012
(73) Patentinhaber: KUKA Roboter GmbH, 86165 Augsburg (DE)
(72) Erfinder: Hoene, Albrecht, 93138 Lappersdorf (DE); Bischoff, Rainer, 86163 Augsburg (DE); Bohlken, Wolfgang, 86456 Gablingen (DE); Glatz, Hans-Michael, 86179 Augsburg (DE); Koeppe, Ralf, 86199 Augsburg (DE); Kurth, Johannes, 86163 Augsburg (DE); Liepert, Bernd, 86495 Meitingen (DE); Pfaff, Patrick, 86165 Augsburg (DE)
(74) Vertreter: Patentanwälte Funk & Böss GbR

(56) Entgegenhaltungen:
- EP-A1- 0 052 367
- WO-A1-93/00285
- DE-A1-102008 002 274
- FR-A1- 2 910 363
- JP-A- 6 079 472
- JP-A- 9 001 492

## Beschreibung

Die Erfindung betrifft einen roboterintegrierten Arbeitsplatz.

Die DE 41 21 334 A1 beschreibt ein Hebezeug zum bedienungssicheren Bewegen einer Last an einem manuell schwenkbaren Ausleger durch Ausbalancieren von Eigengewichts- und Lastmomenten. Dazu weist das Hebezeug einen druckbetätigten Fluidzylinder auf, der mit Hilfe von Reglern für den Arbeitsdruck im Fluidzylinder und einem elektronischen Steuer- und Regelsystem den momentan erforderlichen Arbeitsdruck regelt. Eine Kraftmesseinrichtung, die von der Last auf den Ausleger ausgeübte Kräfte ermittelt, ist zwischen dem Ausleger und einem Lastaufnahmemittel angeordnet. Das Steuer- und Regelsystem ist außerdem mit Mitteln zum Bilden eines den Kräften entsprechenden elektrischen Signals ausgestattet und weist Mittel zum Leiten des Signals an einen Prozessor auf, der ein Fluidventil ansteuert. Das Hebezeug ist zum manuellen Bewegen einer Last an einem schwenkbaren Ausleger eingerichtet, wobei die Eigengewichts- und Lastmomente bedienungssicher durch ein Gegengewicht und einen druckbetätigten Fluidzylinder mit Hilfe von Reglern für einen Arbeitsdruck im Zylinder ausbalanciert werden.

Hebezeuge im Allgemeinen können einen Ausleger aufweisen, der beispielsweise um eine Standsäule drehbar ist. Zusätzlich kann für eine vertikale Schwenkbewegung der Ausleger beispielsweise als Parallelogrammgestänge ausgeführt sein, um in jeder möglichen Position des Auslegers eine senkrechte Ausrichtung eines Armteils über dem Lastaufnahmemittel zu erreichen. Die statischen Eigengewichtsmomente werden häufig durch reitende, verschiebbare Gegengewichte oder gemeinsam mit den von einer Anhängelast oder einer dynamischen Bewegung herrührenden Momente durch einen hydraulisch oder pneumatisch beaufschlagten Fluid-Zylinder austariert und balanciert.

Aus der WO 2009/146899 A1 ist ein omnidirektional bewegliches Fahrzeug bekannt, das durch eine fahrzeuginterne Steuereinrichtung gesteuert wird und einen Industrieroboter, insbesondere in Art eines Leichbauroboters, trägt. Die Bewegung dieser omnidirektionalen Plattform, d. h. die Bewegungsrichtung, Bewegungsgeschwindigkeit, Richtungsänderungen und dergleichen, werden programmgesteuert beeinflusst. Solche Plattformen sind eigenständig mobil.

Aufgabe der Erfindung ist es, einen roboterintegrierten Arbeitsplatz anzugeben, bei dem Bauteile durch einen mobilen Roboterarm gehandhabt werden können, die ein höheres Eigenwicht als die Tragkraft des Roboterarms aufweisen.

Die Aufgabe der Erfindung wird gelöst durch einen roboterintegrierten Arbeitsplatz, aufweisend ein Hebezeug mit einer Einrichtung zum Ausgleichen von Gewichtskräften eines Bauteils, das von einem Halter des Hebezeugs tragbar ist, des Weiteren aufweisend eine autonom fahrbare Plattform mit einer Robotersteuerung und mit einem von der Robotersteuerung zu bewegenden Roboterarm, der einen Endeffektor aufweist, der eingerichtet ist, das durch das Hebezeug getragene Bauteil zu bewegen.

Der roboterintegrierte Arbeitsplatz kann beispielsweise eine Roboterzelle, eine Fertigungszelle und/oder ein Montagearbeitsplatz sein.

Roboter, insbesondere Industrieroboter, aufweisend einen Manipulator und eine den Manipulator bewegende Steuerung sollen auch in Umgebungen eingesetzt werden, in denen sich Menschen aufhalten. Roboter sind daher oft klein, d.h. mit geringer Masse ausgeführt, um das Gesamtsystem nicht zu groß werden zu lassen und auch um auch energieeffizient zu bleiben. So kann die Traglast des Roboters beispielsweise auf einen Bereich unter ca. 10 kg begrenzt sein.

Größere Lasten, d.h. beispielsweise Lasten, die ein höheres Eigengewicht als 10 kg aufweisen, können mit solchen kleinen Robotern bisher nicht bewegt werden.

So kann es ein Ziel der Erfindung sein, die Tragfähigkeit des mobilen Roboters zu erhöhen, ohne den Roboter selbst leistungsfähiger bzw. schwerer zu machen.

Zu Lösung sieht die Erfindung eine Kombination eines mobilen Roboters mit einem Hebezeug vor. Hebezeuge werden auch als Balancer bezeichnet. Der Balancer kann dabei eine deutlich größere Reichweite als der Roboterarm aufweisen, wenn er ohne Verfahren der autonom fahrbaren Plattform bewegt wird.

Der mobile, d.h. der auf der autonom fahrbaren Plattform befestigte Roboter kann den Balancer an verschiedenen Orten innerhalb der Reichweite des Balancers einsetzen. Durch die erfindungsgemäße Kombination des Hebezuges bzw. des Balancers mit einem Roboter, der auf einer autonom fahrbaren Plattform verfahrbar ist, kann der Arbeitsbereich und die Handhabungsfähigkeit des Roboters deutlich erhöht werden. Dies hat beispielsweise bei Logistikapplikationen einen Vorteil.

Erfindungsgemäße kann der Balancer auch von einem Menschen betätigt werden. Sollte aus welchen Gründen auch immer der auf einer autonom fahrbaren Plattform verfahrbare Roboter ausfallen, kann ein Mensch die Aufgabe mit Hilfe des Balancers auch ohne Roboter weiterführen.

Das Hebezeug kann in einer ersten Ausführung ortsfest installiert sein. Zu seiner ortsfesten Installation kann das Hebezeug eine Fundamentplatte aufweisen. Die Fundamentplatte kann beispielsweise direkt in einen Boden des roboterintegrierten Arbeitsplatzes einbetoniert sein, oder mittels Befestigungsmittel, wie beispielsweise Bodenanker oder Schrauben lösbar mit dem Boden verbunden sein.

In einer Ausgestaltung kann das Hebezeug ausgebildet sein, das Bauteil auch in eine Position innerhalb eines Arbeitsraums des Hebezeugs zu tragen, in der das Bauteil durch den Endeffektor des Roboterarms nur unter verfahren der Plattform erreichbar ist. Mit anderen Worten kann das Hebezeug einen deutlich, insbesondere vielfach größeren Arbeitsraum aufweisen, als der Roboterarm. Dabei ist als Arbeitsraum des Roboterarm dasjenige Volumen gemeint, das von einem durch den Roboterarm bewegten Endeffektor ohne Verfahren der mobilen Plattform bedient werden kann. Durch ein Verfahren der mobilen Plattform wir der kleinere Arbeitsraum des Roboterarm insoweit auf den Arbeitsraum des Hebezeugs erweitert.

In allen erfindungsgemäßen Ausgestaltungen kann das Hebezeug ein oder mehrere angetriebene Gelenke, insbesondere pneumatisch oder von elektrischen Motoren angetriebene Gelenke aufweisen, die insbesondere von der Robotersteuerung gesteuert werden. Das Hebezeug kann zum Ausgleichen von Gewichtskräften eines Bauteils, das von einem Halter des Hebezeugs tragbar ist, einer Einrichtung aufweisen, die beispielsweise mechanisch, hydraulische und/oder pneumatische Dämpfer, Federn und/oder Gegengewichte aufweisen kann. Alternativ oder ergänzend können einzelne oder mehrere Gelenke, d.h. Freiheitsgrade des Hebezeugs auch aktiv, d.h. mittels pneumatisch oder elektrisch angetriebener Motoren bewegt werden, um Gewichtskräften eines Bauteils auszugleichen.

Die Robotersteuerung kann außerdem eingerichtet sein, die ein oder mehreren angetriebenen Gelenke des Hebezeugs derart anzusteuern, dass die Reibung in einem oder mehreren Gelenken des Hebezeugs und/oder die Massenträgheit des Bauteils und/oder die Massenträgheit von Gliedern des Hebezeugs verringert ist.

In einer anderen Ausgestaltung kann das Hebezeug, alternativ zu einer ortsfesten Installation, auf der autonom fahrbaren Plattform installiert sein. Dadurch kann der Arbeitsbereich des mobilen Roboters erweitert werden, beispielsweise auch "unendlich" groß werden, da der Arbeitsbereich in dieser Ausgestaltung nicht mehr durch die Reichweite des Hebezeugs, d.h. des Balancers begrenzt ist. Der Balancer kann in Folge deutlich kleiner und damit preiswerter gestaltet werden.

Ein Griff bzw. ein Halter des Balancers kann dabei jederzeit, d.h. in jeder Position der fahrbaren Plattform vom Roboterarm gegriffen werden. Im Fall des ortsfest montierten Balancer wäre es unter Umständen notwendig, dass der mobile Roboter erst durch den Arbeitsplatz fahren muss, um zu dem Griff bzw. den Halter des Balancers zu kommen. Der Griff bzw. der Halter des Balancers kann für die Automatisierung mit dem Roboterarm angepasst sein.

Da in dieser Ausgestaltung der Balancer fest mit dem mobilen Roboter verbunden ist, ist es auch einfach möglich, die vertikale Achse des Balancers über ein aktives Stellelement zu verändern, das über die Steuerung der mobilen Plattform angesteuert wird. Damit sind synchrone Bewegungen des Balancers und des Roboterarms möglich. Als Stellelemente können pneumatische oder elektrische Antriebe eingesetzt werden.

Das Hebezeug kann auch ausgebildet sein, das Bauteil lediglich in Positionen innerhalb eines Arbeitsraums des Hebezeugs zu tragen, in der das Bauteil durch den Endeffektor des Roboterarms erreichbar ist.

Das Hebezeug kann ein oder mehrere angetriebene Gelenke, insbesondere pneumatisch oder von elektrischen Motoren angetriebene Gelenke aufweisen, die von der Robotersteuerung gesteuert werden.

Die Robotersteuerung kann eingerichtet sein, die ein oder mehreren angetriebenen Gelenke des Hebezeugs derart anzusteuern, dass die Reibung in einem oder mehreren Gelenken des Hebezeugs und/oder die Massenträgheit des Bauteils und/oder die Massenträgheit von Gliedern des Hebezeugs verringert ist.

In allen erfindungsgemäßen Ausgestaltungen kann das Hebezeug wenigstens einen optischen Sensor, insbesondere eine Kamera aufweisen, die eingerichtet ist, die Umgebung, insbesondere eine Decke in einem Raum des roboterintegrierten Arbeitsplatzes zur Navigation der autonom fahrbaren Plattform zu erfassen.

Die Erfindung kann in allen Ausführungen dahin gehend erweitert werden, dass am Balancer, d.h. am Hebezeug eine oder mehrere optische Sensoren bzw. Kameras angebracht werden. Über diese Kameras kann der Ort, an dem der mobile Roboter Handlings- oder andere Aufgaben wahrnehmen soll, beobachtet werden. Mit den optischen Sensoren kann z.B. die Position von zu greifenden Werkstücken ermittelt werden. Auch sind visiongestützte Kollisionsüberwachungen zwischen dem Roboterarm und der Umwelt möglich. Als Sicherheitsfunktionalität ausgeführt ermöglicht dies eine Mensch-Roboter Kooperation.

In allen erfindungsgemäßen Ausgestaltungen kann das Hebezeug somit wenigstens einen optischen Sensor, insbesondere eine Kamera aufweisen, die eingerichtet ist, den roboterintegrierten Arbeitsplatz, insbesondere eine Position und/oder Orientierung des Bauteils, des Roboterarms, der autonom fahrbaren Plattform, des Endeffektors oder des Halters und/oder eine Kollision, insbesondere dieser genannten Teile, zu erfassen.

Der optische Sensor oder die optischen Sensoren, bzw. die Kamera kann hierbei an verschiedenen Orten des Balancers, d.h. des Hebezeugs angebracht sein. Hierdurch kann sich ein guter Sichtbereich der Kamera ergeben. Eine Ausrichtung der Kamera auf den relevanten Arbeitsbereich des Roboters ist dadurch möglich, dass der Roboter den Balancer und damit auch indirekt den oder die optischen Sensoren bzw. die Kamera führt.

Dies stellt eine kostengünstige Lösung dar, da keine weiteren Stative für die optischen Sensoren bzw. die Kamera vorgesehen werden müssen.

Wird die Kamera an dem feststehenden Balancer befestigt, dann müssen z.B. über Funktechnik die Daten an den mobilen Roboter übertragen werden.

In einer Weiterbildung der Erfindung kann der Pfosten des Balancers, d.h. eine Standsäule des Hebezeugs auch zur Anbringung einer Kamera genutzt werden, die beispielsweise zur Decke schaut und zur Navigation der Plattform verwendet wird. Auf Grund der exponierten Position auf dem Pfosten bzw. der Standsäule hat die Kamera einen nahezu ungestörten Blick auf die Decke, was für die Robustheit der Navigation von Vorteil sein kann.

Alle Ausgestaltungen des erfindungsgemäßen roboterintegrierten Arbeitsplatzes können dahin gehend erweitert werden, dass der Balancer in einer ggf. in mehreren Achsen mit elektrischen Antrieben ausgestattet ist, die mit dem Steuerungssystems des Roboters gekoppelt sind. Der Roboter kann dabei mit einer Kraftregelung ausgestattet sein. Das Ziel des Einsatzes solcher Unterstützungsmotoren ist es, die Reibung und Massenträgheit in einer oder mehreren Hauptachsen des Balancers zu verringern, um die damit resultierende Sensitivität des Roboters zu erhöhen. Die Achsen des Balancers können dazu mit Gebersystem ausgestattet sein.

Verschiedene Ausführungsbeispiele der Erfindung sind exemplarisch in den beigefügten Figuren dargestellt, die erfindungsgemäße roboterintegrierte Arbeitsplätze zeigen.

Es zeigen:
- Fig. 1: eine perspektivische Ansicht eines roboterintegrierten Arbeitsplatzes mit einem Roboterarm auf einer autonom fahrbaren Plattform und einem Hebezeug mit einer Einrichtung zum Ausgleichen von Gewichtskräften eines Bauteils;
- Fig. 2: eine perspektivische Ansicht eines alternativen roboterintegrierten Arbeitsplatzes mit einem Roboterarm und einem Hebezeug mit einer Einrichtung zum Ausgleichen von Gewichtskräften eines Bauteils auf einer gemeinsamen autonom fahrbaren Plattform;
- Fig. 3: eine Seitenansicht auf den roboterintegrierten Arbeitsplatz gemäß Fig. 2 mit einer optischen Sensoreinrichtung;
- Fig. 4: den roboterintegrierten Arbeitsplatz gemäß Fig. 3 in einer Vorderansicht; und
- Fig. 5: den roboterintegrierten Arbeitsplatz gemäß Fig. 3 in einer Draufsicht.

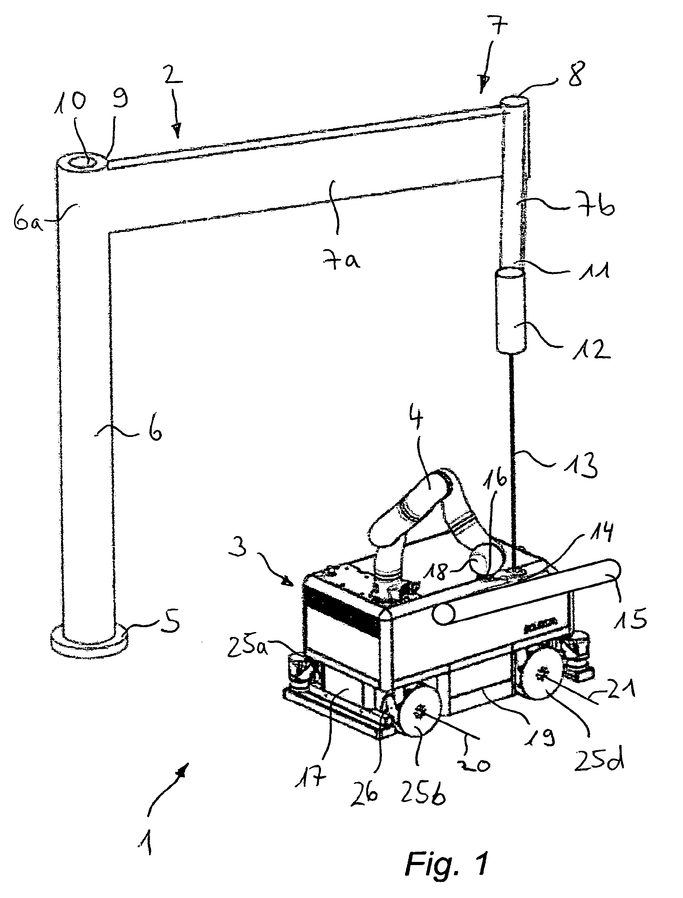

In der Fig. 1 ist eine erste Ausführung eines roboterintegrierten Arbeitsplatzes 1 dargestellt. Der roboterintegrierte Arbeitsplatz 1 weist ein Hebezeug 2 und eine autonom fahrbare Plattform 3 auf. Das Hebezeug 2 ist im dargestellten Ausführungsbeispiel ortsfest installiert. Die autonom fahrbare Plattform 3 weist einen Roboterarm 4 auf. Zu seiner ortsfesten Installation weist das Hebezeug 2 eine Fundamentplatte 5 auf. Die Fundamentplatte 5 kann direkt in einen Boden des roboterintegrierten Arbeitsplatzes 1 einbetoniert sein, oder mittels Befestigungsmittel, wie beispielsweise Bodenanker oder Schrauben lösbar mit dem Boden verbunden sein. Ausgehend von der Fundamentplatte 5 erstreckt sich eine vertikale Standsäule 6 senkrecht nach oben.

Im Bereich eines oberen Endes 6a der Standsäule 6 ist ein Auslegerarm 7 gelagert. Der Auslegerarm 7 weist im dargestellten Ausführungsbeispiel zwei Auslegerarmglieder 7a und 7b auf. Die beiden Auslegerarmglieder 7a und 7b sind über eine Auslegergelenk 8 gelenkig verbunden. Der Auslegerarm 7 ist an einem dem Auslegergelenk 8 gegenüberliegenden, der Standsäule 6 nahen Ende 9 des Auslegerarmgliedes 7a über ein Drehgelenk 10 schwenkbar an der Standsäule 6 gelagert.

An einem dem Auslegergelenk 8 gegenüberliegenden Ende 11 des Auslegerarmgliedes 7b ist eine Hebeeinrichtung 12 befestigt. Im dargestellten Ausführungsbeispiel weist die Hebeeinrichtung 12 ein ausfahrbares bzw. einfahrbares Stahlseil 13 auf. An einem freien Ende des Stahlseils 13 ist ein Halter 14 befestigt. Durch Ausfahren bzw. Einfahren des Stahlseils 13 wird der Halter 14 abgesenkt beziehungsweise angehoben. Ein Absenken beziehungsweise Anheben des Halters 14 erfolgt dabei lediglich zum Ausgleichen von Gewichtskräften eines Bauteils 15, insbesondere passiv und vorzugsweise nicht dazu, das Bauteil 15 aktiv angesteuert zu bewegen. Das Bauteil 15 wird dabei von dem Halter 14 des Hebezeugs 2 getragen. So kann das Hebezeug konstruktiv und steuerungstechnisch einfach gestaltet und mit hoher Sicherheit betrieben werden. Zum Heben oder Senken des Bauteils 15 kann beispielsweise der Halter 14 des Hebezeugs 2 von einem Endeffektor 16 des Roboterarms 4 gegriffen und bewegt werden.

Der roboterintegrierte Arbeitsplatz 1 weist des Weiteren die autonom fahrbare Plattform 3 auf. Auf der autonom fahrbaren Plattform 3 ist der Roboterarm 4 befestigt. Um den Roboterarm 4 aktiv gesteuert zu bewegen, weist die autonom fahrbare Plattform 3 eine Robotersteuerung 17 auf. Mittels der Robotersteuerung 17 wird der Roboterarm 4 angesteuert. Der Roboterarm 4 ist im dargestellten Ausführungsbeispiel als ein mehrachsiger Knickarmroboter ausgeführt. Der Roboterarm 4 weist im Ausführungsbeispiel Kraft-/Momentensensoren auf, so dass der Roboterarm 4 durch die Robotersteuerung 17 kraft-/momentengeregelt betrieben werden kann. Der Roboterarm 4 ist im dargestellten Ausführungsbeispiel als Leichtbauroboter ausgeführt. Der Roboterarm 4 trägt an seinem Endglied 18 den Endeffektor 16. Der Endeffektor 16 ist eingerichtet, das durch das Hebezeug 2 getragene Bauteil 15 zu bewegen.

Die autonom fahrbare Plattform 3 kann, wie im dargestellten Ausführungsbeispiel, ein Fahrzeugchassis 19 mit einer ersten geometrischen Radachse 20 und einer zweiten geometrischen Radachse 21 aufweisen. Ausgerichtet entlang der ersten Radachse 20 trägt das Fahrzeugchassis 19 ein rechtes vorderes angetriebenes Omnidirektional-Rad 25a und ein linkes vorderes angetriebenes Omnidirektional-Rad 25b. Ausgerichtet entlang der zweiten Radachse 21 trägt das Fahrzeugchassis 19 ein rechtes hinteres angetriebenes Omnidirektional-Rad 25c(nicht dargestellt) und ein linkes hinteres angetriebenes Omnidirektional-Rad 25d. Jeder Omnidirektional-Rad 25a, 25b, 25c, 25d ist mit einem eigenen Antrieb verbunden. Jeder Antrieb ist unabhängig von den anderen Antrieben sowohl bezüglich Drehgeschwindigkeit als auch bezüglich Drehrichtung ansteuerbar.

Jeweils ein diagonales Rad-Paar 25a, 25c und 25b, 25d weist Rollkörper 26 auf, die in einer selben Richtung in einem Winkel schräg zur Radachse 20 bzw. Radachse 21 verlaufend ausgerichtet sind. Das jeweils andere diagonale Rad-Paar 25a, 25c und 25b, 25d weist Rollkörper 26 auf, die in einer selben Richtung in einem zum ersten Winkel entgegen gesetzten zweiten Winkel schräg zur Radachse 20 bzw. Radachse 21 verlaufend ausgerichtet sind. Üblicherweise werden die Rollkörper 26 in einem Winkel von 45° angeordnet. Es können in Sonderausführungen jedoch auch andere Winkel, bspw. zwischen 30° und 60° realisiert sein.

Bewegen sich alle vier Räder 25a, 25b, 25c und 25d mit gleicher Geschwindigkeit in derselben Drehrichtung, so bewegt sich die autonom fahrbare Plattform 3 geradeaus vorwärts. Drehen die Räder 25a, 25b oder 25c, 25d jeweils derselben Radachse 20 oder 21 gegenläufig und alle Räder 25a, 25b, 25c und 25d mit gleicher Drehzahl, so bewegt sich die autonom fahrbare Plattform 3 seitwärts, also senkrecht zur ursprünglichen Fahrtrichtung. Drehen die diagonalen RadPaare 25a, 25d oder 25b, 25c jeweils mit gleicher Drehzahl und alle Räder 25a, 25b, 25c und 25d mit derselben Drehrichtung, so bewegt sich die autonom fahrbare Plattform 3 diagonal, bzw. schräg d.h. in einem Winkel der zwischen der Vorwärtsrichtung und Seitwärtsrichtung liegt. Drehen jeweils das eine Rad-Paar 25a, 25c der rechten Seite in eine Drehrichtung und das andere Rad-Paar 25b, 25d der linken Seite in die entgegen gesetzte Drehrichtung, so dreht sich die autonom fahrbare Plattform 3 um seine Mitte.

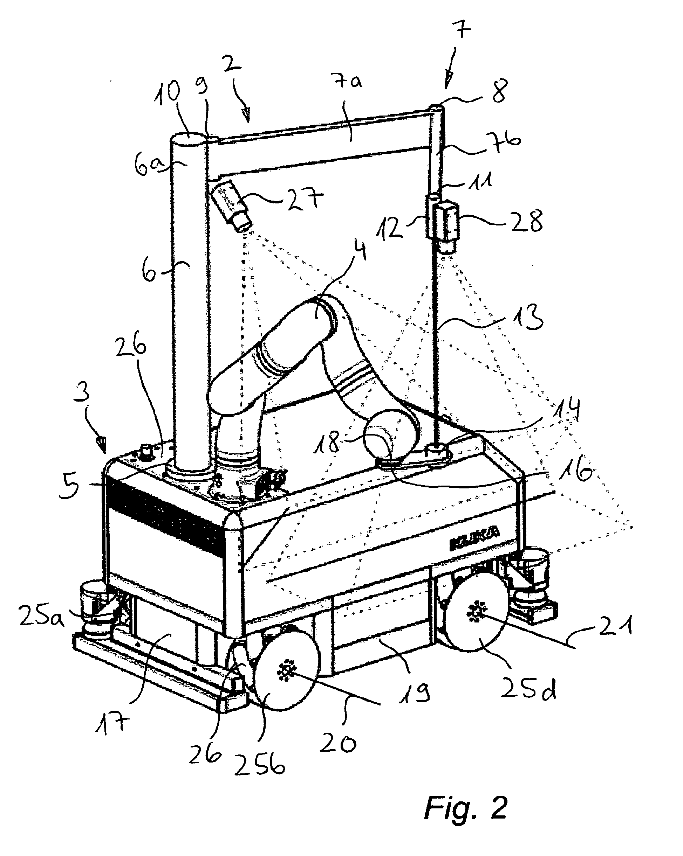

In der Fig. 2 ist eine zweite Ausführung eines roboterintegrierten Arbeitsplatzes 1 dargestellt. Der roboterintegrierte Arbeitsplatz 1 weist das Hebezeug 2 und die autonom fahrbare Plattform 3 auf. Das Hebezeug 2 ist in dem zweiten Ausführungsbeispiel auf der autonom fahrbaren Plattform 3 installiert.

Entgegen der Ausführung gemäß Fig. 1 ist bei der zweiten Ausführung gemäß Fig. 2 die Fundamentplatte 5 nicht direkt in einen Boden des roboterintegrierten Arbeitsplatzes 1 einbetoniert, oder mittels Befestigungsmittel, wie beispielsweise Bodenanker oder Schrauben lösbar mit dem Boden verbunden, sondern die Fundamentplatte 5 ist auf einer Tragplatte 26 der autonom fahrbaren Plattform 3 befestigt. Im dargestellten Ausführungsbeispiel ist der Roboterarm 4 auf derselben Tragplatte 26 befestigt, wie das Hebezeug 2.

In dem in Fig. 2 dargestellten Ausführungsbeispiel sind außerdem ein erster optischer Sensor 27 und ein zweiter optischer Sensor 28 vorgesehen. Sowohl der erste optische Sensor 27, als auch der zweite optische Sensor 28 sind an dem Hebezeug 2 vorgesehen bzw. an diesem befestigt oder gelagert. Sowohl der erste optische Sensor 27, als auch der zweite optische Sensor 28 kann eine Kamera sein, die Einzelbilder oder Sequenzen, d.h. Folgen von Bildern erfassen kann. Die optischen Sensoren 27 und 28 sind eingerichtet, den roboterintegrierten Arbeitsplatz 1, insbesondere eine Position und/oder Orientierung des Bauteils 15, des Roboterarms 4, der autonom fahrbaren Plattform 3, des Endeffektors 16 oder des Halters 14 und/oder eine Kollision, zu erfassen.

Darüber hinaus ist das Hebezeug 2 nach der Ausführung gemäß Fig. 2 analog der Ausführung gemäß Fig. 1 ausgebildet.

Der erste optische Sensor 27 ist derart ausgerichtet an dem Hebezeug 2 befestigt, dass ein Arbeitsbereich des Roboterarms 4 überwacht werden kann. Der zweite optische Sensor 28 ist derart ausgerichtet an dem Hebezeug 2 befestigt, dass ein Arbeitsbereich des Halters 14 des Hebezeugs 2 bzw. das Bauteil 15 überwacht werden kann.

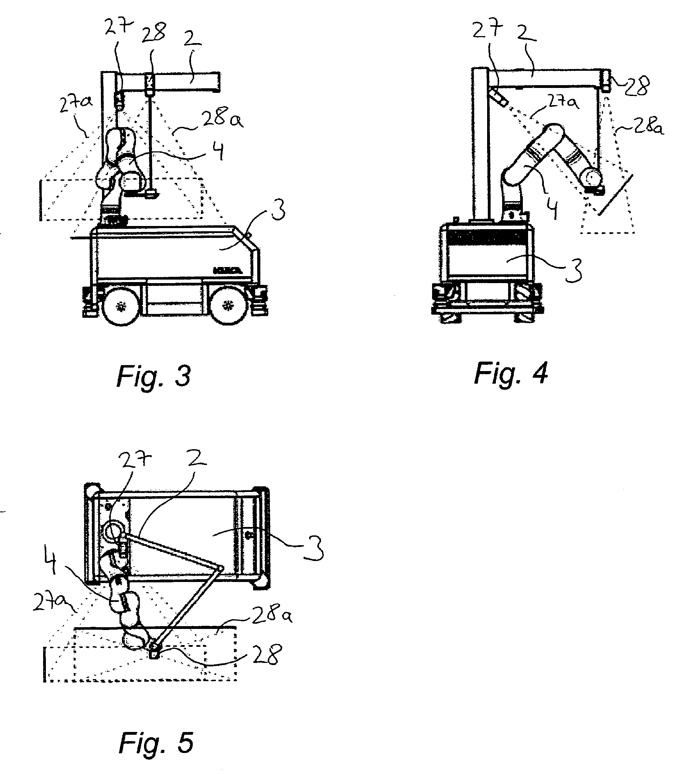

Die Fig. 3 zeigt eine Vorderansicht der zweiten Ausführung des roboterintegrierten Arbeitsplatzes 1 mit der autonom fahrbaren Plattform 3 auf der sowohl der Roboterarm 4 als auch das Hebezeug 2 befestigt ist. In der Fig. 3 sind die optischen Blickfelder 27a und 28b der optischen Sensoren 27 und 28 der Vorderansicht illustriert.

Die Fig. 4 zeigt eine Seitenansicht der zweiten Ausführung des roboterintegrierten Arbeitsplatzes 1 mit der autonom fahrbaren Plattform 3 auf der sowohl der Roboterarm 4 als auch das Hebezeug 2 befestigt ist. In der Fig. 4 sind die optischen Blickfelder 27a und 28b der optischen Sensoren 27 und 28 der Vorderansicht illustriert.

Die Fig. 5 zeigt eine Draufsicht der zweiten Ausführung des roboterintegrierten Arbeitsplatzes 1 mit der autonom fahrbaren Plattform 3 auf der sowohl der Roboterarm 4 als auch das Hebezeug 2 befestigt ist. In der Fig. 5 sind die optischen Blickfelder 27a und 28b der optischen Sensoren 27 und 28 der Vorderansicht illustriert.

## Patentansprüche

1. Roboterintegrierter Arbeitsplatz, aufweisend ein Hebezeug (2) und einen von einer Robotersteuerung (17) zu bewegenden Roboterarm (4), der einen Endeffektor (16) aufweist, **dadurch gekennzeichnet, dass** das Hebezeug (2) eine Einrichtung zum Ausgleichen von Gewichtskräften eines Bauteils (15), das von einem Halter (14) des Hebezeugs (2) tragbar ist, aufweist und des Weiteren aufweisend eine autonom fahrbare Plattform (3) mit der Robotersteuerung (17), wobei der Endeffektor (16) eingerichtet ist, das durch das Hebezeug (2) getragene Bauteil (15) zu bewegen.

2. Roboterintegrierter Arbeitsplatz nach Anspruch 1, bei dem das Hebezeug (2) ortsfest installiert ist.

3. Roboterintegrierter Arbeitsplatz nach Anspruch 2, bei dem das Hebezeug (2) ausgebildet ist, das Bauteil (15) auch in eine Position innerhalb eines Arbeitsraums des Hebezeugs (2) zu tragen, in der das Bauteil (15) durch den Endeffektor (16) des Roboterarms (4) nur unter Verfahren der Plattform (3) erreichbar ist.

4. Roboterintegrierter Arbeitsplatz nach einem der Ansprüche 1 bis 3, bei dem das Hebezeug (2) ein oder mehrere angetriebene Gelenke (8, 10, 12), insbesondere pneumatische oder von elektrischen Motoren angetriebene Gelenke (8, 10, 12) aufweist, die von der Robotersteuerung (17) gesteuert werden.

5. Roboterintegrierter Arbeitsplatz nach Anspruch 4, bei dem die Robotersteuerung (17) eingerichtet ist, die ein oder mehreren angetriebenen Gelenke (8, 10, 12) des Hebezeugs (2) derart anzusteuern, dass die Reibung in einem oder mehreren Gelenken (8, 10, 12) des Hebezeugs (2) und/oder die Massenträgheit des Bauteils (15) und/oder die Massenträgheit von Gliedern (7a, 7b) des Hebezeugs (2) verringert ist.

6. Roboterintegrierter Arbeitsplatz nach Anspruch 1, bei dem das Hebezeug (2) auf der autonom fahrbaren Plattform (3) installiert ist.

7. Roboterintegrierter Arbeitsplatz nach Anspruch 6, bei dem das Hebezeug (2) ausgebildet ist, das Bauteil (15) lediglich in Positionen innerhalb eines Arbeitsraums des Hebezeugs (2) zu tragen, in der das Bauteil (15) durch den Endeffektor (16) des Roboterarms (4) erreichbar ist.

8. Roboterintegrierter Arbeitsplatz nach Anspruch 6 oder 7, bei dem das Hebezeug (2) ein oder mehrere angetriebene Gelenke (8, 10, 12), insbesondere pneumatisch oder von elektrischen Motoren angetriebene Gelenke (8, 10, 12) aufweist, die von der Robotersteuerung (17) gesteuert werden.

9. Roboterintegrierter Arbeitsplatz nach Anspruch 8, bei dem die Robotersteuerung (17) eingerichtet ist, die ein oder mehreren angetriebenen Gelenke (8, 10, 12) des Hebezeugs (2) derart anzusteuern, dass die Reibung in einem oder mehreren Gelenken (8, 10, 12) des Hebezeugs (2) und/oder die Massenträgheit des Bauteils (15) und/oder die Massenträgheit von Gliedern (7a, 7b) des Hebezeugs (2) verringert ist.

10. Roboterintegrierter Arbeitsplatz nach einem der Ansprüche 1 bis 9, bei dem das Hebezeug (2) wenigstens einen optischen Sensor (27, 28), insbesondere eine Kamera aufweist, die eingerichtet ist, die Umgebung, insbesondere eine Decke in einem Raum des roboterintegrierten Arbeitsplatzes (1) zur Navigation der autonom fahrbaren Plattform (3) zu erfassen.

11. Roboterintegrierter Arbeitsplatz nach einem der Ansprüche 1 bis 10, bei dem das Hebezeug (2) wenigstens einen optischen Sensor (27, 28), insbesondere eine Kamera aufweist, die eingerichtet ist, den roboterintegrierten Arbeitsplatz (1), insbesondere eine Position und/oder Orientierung des Bauteils (15), des Roboterarms (4), der autonom fahrbaren Plattform (3), des Endeffektors (16) oder des Halters (14) und/oder eine Kollision, insbesondere dieser genannten Teile, zu erfassen.

## Claims

1. Robot-integrated workstation comprising a lifting device (2) and a robot arm (4) to be moved by a robot control (17) which robot arm comprises an end effector (16), **characterised in that** the lifting device (2) comprises a device for equalising the weight forces of a component (15) which can be carried by a holder (14) of the lifting device (2) and also comprising an autonomously movable platform (3) with the robot control (17), wherein the end effector (16) is configured to move the component (15) carried by the lifting device (2).

2. Robot-integrated workstation according to claim 1, in which the lifting device (2) is installed in a fixed position.

3. Robot-integrated workstation according to claim 2, in which the lifting device (2) is configured to carry the component (15) into a position within a working area of the lifting device (2) in which the component (15) can be reached by the end effector (16) of the robot arm (4) only by moving the platform (3).

4. Robot-integrated workstation according to one of claims 1 to 3, in which the lifting device (2) comprises one or more driven articulations (8, 10, 12), in particular pneumatic articulations (8, 10, 12) or articulations driven by electric motors which are controlled by the robot control (17).

5. Robot-integrated workstation according to claim 4, in which the robot control (17) is configured to control one or more driven articulations (8, 10, 12) of the lifting device (2) such that the friction in one or more articulations (8, 10, 12) of the lifting device (2) is reduced and/or the inertia of the component (15) and/or the inertia of members (7a, 7b) of the lifting device (2) is reduced.

6. Robot-integrated workstation according to claim 1, in which the lifting device (2) is installed on the autonomously movable platform (3).

7. Robot-integrated workstation according to claim 6, in which the lifting device (2) is configured to carry the component (15) only into positions within a working area of the lifting device (2) in which the component (15) can be reached by the end effector (16) of the robot arm (4).

8. Robot-integrated workstation according to claim 6 or 7, in which the lifting device (2) comprises one or more driven articulations (8, 10, 12), in particular pneumatic articulations (8, 10, 12) or articulations driven by electric motors which are controlled by the robot control (17).

9. Robot-integrated workstation according to claim 8, in which the robot control (17) is configured to control one or more driven articulations (8, 10, 12) of the lifting device (2) such that the friction in one or more articulations (8, 10, 12) of the lifting device (2) is reduced and/or the inertia of the component (15) and/or the inertia of members (7a, 7b) of the lifting device (2) is reduced.

10. Robot-integrated workstation according to one of claims 1 to 9, in which the lifting device (2) comprises at least one optical sensor (27, 28), in particular a camera, which is configured to detect the surroundings, in particular a ceiling in a room of the robot-integrated workstation (1) for the navigation of the autonomously movable platform (3).

11. Robot-integrated workstation according to one of claims 1 to 10, in which the lifting device (2) comprises at least one optical sensor (27, 28), in particular a camera, which is configured to detect the robot-integrated workstation (1), in particular a position and/or orientation of the component (15), the robot arm (4), the autonomously movable platform (3), the end effector (16) or the holder (14) and/or a collision, particularly of said named parts.

## Revendications

1. Poste de travail intégré à un robot, présentant un élément élévateur (2) et un bras de robot (4) à mouvoir par une commande de robot (17), qui présente un organe préhenseur (16), **caractérisé en ce que** l'élément élévateur (2) présente un dispositif de compensation de forces pondérales d'un composant (15) qui peut être porté par un support (14) de l'élément élévateur(2) et qui présente en outre une plateforme (3) déplaçable de façon autonome avec la commande de robot (17), l'organe préhenseur (16) étant adapté pour déplacer le composant (15) porté par l'élément élévateur (2).

2. Poste de travail intégré à un robot selon la revendication 1, dans lequel l'élément élévateur (2) est installé de façon stationnaire.

3. Poste de travail intégré à un robot selon la revendication 2, dans lequel l'élément élévateur (2) est réalisé pour porter aussi le composant (15) dans une position à l'intérieur d'un espace de travail de l'élément élévateur (2), dans laquelle le composant ne peut être atteint par l'organe préhenseur (16) du bras de robot (4) qu'en transportant la plateforme (3).

4. Poste de travail intégré à un robot selon l'une des revendications 1 à 3, dans lequel l'élément élévateur (2) présente une ou plusieurs articulations (8, 10, 12) entraînées, en particulier des articulations (8, 10, 12) entraînées de manière pneumatique ou par des moteurs électriques qui sont commandés par la commande de robot (17).

5. Poste de travail intégré à un robot selon la revendication 4, dans lequel la commande de robot (17) est adaptée pour commander une ou plusieurs articulations (8, 10, 12 (8, 10, 12) de l'élément élévateur) entraînées de l'élément élévateur (2) de telle sorte que la friction dans une ou plusieurs articulations (2) et/ou l'inertie de masse du composant (15) et/ou l'inertie de membres (7a, 7b) de l'élément élévateur (2) est réduite.

6. Poste de travail intégré à un robot selon la revendication 1, dans lequel l'élément élévateur (2) est installé sur la plateforme (3) déplaçable de façon autonome.

7. Poste de travail intégré à un robot selon la revendication 6, dans lequel l'élément élévateur (2) est réalisé pour porter le composant uniquement dans des positions à l'intérieur d'un espace de travail de l'élément élévateur (2), dans lesquelles le composant peut être atteint par l'organe préhenseur (16) du bras de robot (4).

8. Poste de travail intégré à un robot selon la revendication 6 ou 7, dans lequel l'élément élévateur (2) présente une ou plusieurs articulations (8, 10, 12) entraînées, en particulier des articulations (8, 10, 12) entraînées de manière pneumatique ou par des moteurs électriques, qui sont commandées par la commande de robot (17).

9. Poste de travail intégré à un robot selon la revendication 8, dans lequel la commande de robot (17) est adaptée pour commander une ou plusieurs articulations (8, 10, 12) entraînées de l'élément élévateur (2) de telle sorte que la friction dans une ou plusieurs articulations (8, 10, 12) de l'élément élévateur (2) et/ou l'inertie de masse du composant (15) et/ou l'inertie de membres (7a, 7b) de l'élément élévateur (2) est réduite.

10. Poste de travail intégré à un robot selon l'une des revendications 1 à 9, dans lequel l'élément élévateur (2) présente au moins un capteur optique (27, 28), en particulier une caméra qui est adaptée pour détecter l'environnement, en particulier un plafond dans un espace du poste de travail intégré à un robot pour la navigation de la plateforme (3) déplaçable de façon autonome.

11. Poste de travail intégré à un robot selon l'une des revendications 1 à 10, dans lequel l'élément élévateur (2) présente au moins un capteur optique (27, 28), en particulier une caméra qui est adaptée pour détecter le poste de travail intégré à un robot (1), en particulier une position et/ou une orientation du composant (15), du bras de robot (4), de la plateforme (3) déplaçable de façon autonome, de l'organe préhenseur (16) ou du support (14) et/ou une collision, en particulier de ces dites pièces.
